Europäisches Patentamt

European Patent Office

Office européen des brevets

(11) Veröffentlichungsnummer: **0 320 588**
**A2**

(12) **EUROPÄISCHE PATENTANMELDUNG**

(21) Anmeldenummer: 88116700.1

(22) Anmeldetag: 07.10.88

(51) Int. Cl.⁴: **B29D 30/06**

(30) Priorität: 16.12.87 HU 572287

(43) Veröffentlichungstag der Anmeldung:
21.06.89 Patentblatt 89/25

(84) Benannte Vertragsstaaten:
AT DE ES FR GB IT SE

(71) Anmelder: **TAURUS GUMIIPARI VALLALAT**
**Kerepesi ut 17 Pf. 48 (1965)**
**Budapest VIII(HU)**

(72) Erfinder: **Fogarasi, Gábor, Dipl.-Ing.**
**Mikes K.U. 7**
**H-1041 Budapest(HU)**
Erfinder: **Sivo, Imre, Dipl.-Chem.**
**Szent István park 4**
**H-1137 Budapest(HU)**
Erfinder: **Zacsek, Gábor**
**Raktár u. 15**
**H-1035 Budapest(HU)**
Erfinder: **Zakariás, István, Dipl.-Ing.**
**Kikelet u. 23**
**H-1125 Budapest(HU)**

(74) Vertreter: **Patentanwälte Viering & Jentschura**
**Steinsdorfstrasse 6**
**D-8000 München 22(DE)**

(54) **Vulkanisierform für eine Reifenvulkanisiermaschine.**

(57) Die Erfindung betrifft eine Vulkanisierform für eine Vulkanisiermaschine zur Herstellung von Gummireifen für Kraftfahrzeuge, mit einem vertikal bewegbaren Oberteil, das einen sich an den Dom der Vulkanisiermaschine anschließenden Auffangring (5), eine sich daran angepaßte obere Platte (1), einen Verschlußring (3) sowie den Formhohlraum begrenzende Formsegmente (16) und eine obere Formhälfte aufweist, wobei der ortsfeste Unterteil eine Grundplatte und eine daran befestigte Formhälfte hat. Die erfindungsgemäße Vulkanisierform zeichnet sich dadurch aus, daß die Formsegmente (16) an der inneren kegel- oder pyramidenförmig ausgestalteten Fläche des Verschlußringes (3) vorgesehen, in Führungsschienen schräg mitnehmbarer Gleitsegmente (4) befestigt sind, wobei die Gleitsegmente (4) in horizontal verlaufenden Führungselementen an der oberen Platte geführt sind und wobei auf dem Verschlußring (3) ein die Größe der Vorspannspalte zwischen dem Auffangring (5) und der oberen Platte regulierender Ausgleichsring (11) vorgesehen ist, der eine Stellschraube (10) und eine Befestigungsschraube (14) aufweist.

Fig.1

## Vulkanisierform für eine Reifenvulkanisiermaschine

Die Erfindung betrifft eine Vulkanisierform für eine Reifenvulkanisiermaschine, die gegenüber den bisher für ähnliche Zwecke verwendete Maschinen vielseitiger eingesetzt werden kann, da auf einfache Weise die vulkanisierenden Preßwerkzeuge für Gummireifen voneinander verschiedener Abmessungen ohne Schwierigkeiten, angepaßt werden können.

Die bekannten Vulkanisierformen mit austauschbaren Musterungen, die sogenannten "Kontainer" sind von ihrer Art her einem einzigen Typ der Vulkanisiermaschinen, bzw. einem engen Bereich der Reifenabmessungen zugeordnet.

Die sich aus der Produktion ergebenden Ungenauigkeiten, bzw. bei der Vulkanisierung entstehenden Deformationen können ausschließlich durch ein Auseinandernehmen des Kontainers eliminiert werden, wobei die von der Vulkanisierungstechnologie beanspruchten Vorspannungsspalte -auf deren Rolle später detailliert eingegangen wird - nur durch eine nachträgliche Bearbeitung der einzelnen Bestandteile des Kontainers auf den gewünschten Wert eingestellt werden können.

Bei den Schließverfahren der Formsegmente, der radialen Einspannung des zu vulkanisierten Reifens, wird bereits seit langem die radiale Bewegung durch Gleiten entlang der Innenfläche des Kegelmantels angewendet. Eine derartige Lösung ist z. B. in dem deutschen Patent DE-PS 22 54 334 oder in der Patentschrift EP 0 170 109 beschrieben.

Wenn die Vulkanisierform geschlossen wird, wirkt eine nach unten gerichtete Kraft auf das obenliegende strukturelle Element ein; diese Kraft muß auf die die radiale Einspannung des Rohreifens ausführenden Segmente übertragen werden und zwar derart, daß die Anordnung und die Einspannung möglichst am besten sind. Aus diesem Grund sieht man sogenannte Vorspannungsspalte vor, damit die zunehmende Druckkraft bis zu einer gewissen Grenze nur in Richtung der gleitenden Segmente angreift und erst nach dem Überschreiten des Grenzwertes auch die mittlere größere Fläche der oberen Platte aufliegt, wenn bereits die sich orientierende Bewegung gegenüber dem hohen Widerstand zum Stillstand gekommen ist. Das bedeutet, daß die Vorspannungsspalte zwischen jenen Teilen vorgesehen sind, die innerhalb der Flansche zweier, mit den oberen Flachebenen einander angepaßten strukturellen Elemente liegen, wobei die Größe und die sich aus dem Grundstoff und Abmessung der obersten gedrückten Platte ergebende elastische Deformation jenen kritischen Druckkraftwert bestimmen, bei dem die Spalte geschlossen sind. Falls die Vorspannungsspalte zu klein sind, kann es aufgrund des frühzeitigen Schließens sehr leicht vorkommen, daß durch den unbefriedigenden Stoß auf dem Reifen ein Grat entsteht. Wenn jedoch die Spalte zu groß sind, kann die obere Formhälfte durch die Hebewirkung des vulkanisierenden Pressens hochgehoben werden, wodurch der vulkanisierte Reifen halbseitig wird.

Der Nachteil der gegenwärtig bekannten und zur Verwendung kommenden Einrichtungen besteht darin, daß die Vorspannungsspalte nur mit Schwierigkeiten, ausschließlich durch Spanabhebung modifiziert werden können. Den Reifen mit voneinander verschiedenen Abmessungen müssen Spalte mit voneinander verschiedenen Größen zugeordnet werden.

Der Erfindung liegt die Aufgabe zugrunde, bei der Fertigung von voneinander verschiedenen Reifengrößen eine erhöhte technologische Elastizität und eine einfache reversible Veränderbarkeit der Vorspannungsspalte zu erreichen. Eine weitere Aufgabe besteht darin, die gegenwärtig üblichen Formsegmente und Preßmaschinen ohne Änderung weiterverwenden zu können.

Dabei gelangte man zu der Erkenntnis, daß der Mechanismus des Formverschlusses das Einsetzen von Formsegmenten verschiedener Größen in die Vulkanisierform dadurch ermöglicht, daß die auftretenden Kraftverhältnisse beim Schließen den optimalen Verhältnissen der Vulkanisierung entsprechen. Desweiteren besteht die Möglichkeit im Interesse der Qualitätsverbesserung ein reversibles Stellwerk zu konstruieren, daß die Vorspannungsspalte regelt.

Um das gesetzte Ziel erreichen zu können, wurde eine Vulkanisierform entwickelt, die in den Vulkanisieranlagen für Kraftfahrzeugreifen, insbesondere für Radialreifen eingesetzt werden kann. Die Verbindung mit dem Dom der Vulkanisiermaschine wird mit einem Auffangring hergestellt, dem sich die weiteren Elemente des oberen, sich in vertikaler Richtung bewegenden Teils - eine obere Platte, ein Verschlußring, die gleitenden Segmente, die der inneren kegel- oder pyramidenförmigen Fläche des Verschlußringes mit Führungsschienen schräg bewegbar angeschlossen sind, an denen die Formsegmene austauschbar befestigt sind - anpassen. Die Bewegung der Gleitsegmente in horizontaler Richtung wird mit Gleitplatten gefördert. Die Größe der Spalte zwischen dem Auffangring und der oberen Platte kann mit Hilfe eines als Korrekturring dienenden Ausgleichsring eingestellt werden, der mit einer Stell- und Befestigungsschraube versehen ist.

Die Erfindung wird anhand einer vorteilhaften Ausführungsform, unter Bezugnahme auf die beiliegende Zeichnung näher erläutert. In der Zeichnung zeigt:

Figur 1 einen radialen Halbschnitt einer geschlossenen Vulkanisierform,

Figur 2 eine Draufsicht auf die Vulkanisierform nach Figur 1,

Figuren 3 bis 7 voneinander verschiedene Radialschnitte der Vulkanisierform.

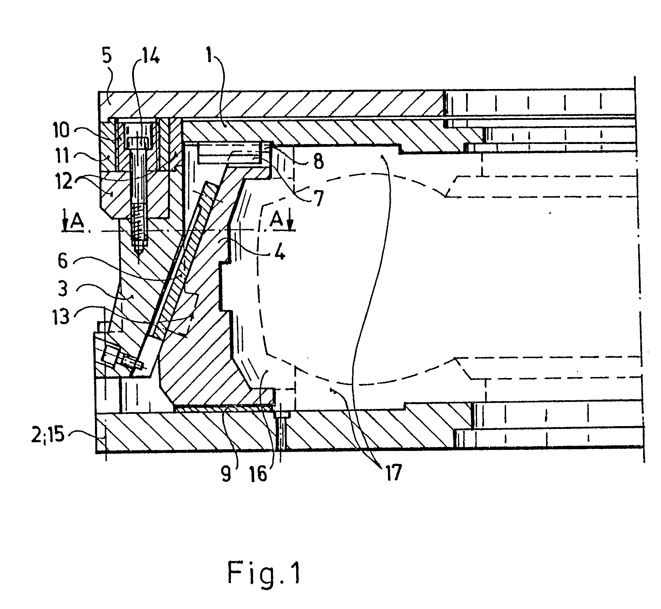

Aus Figur 1 sind im radialen Schnitt die wichtigsten Elemente der im geschlossenen Zustand wiedergegebenen Vulkanisierform ersichtlich. Eine radiale Bewegung der auf einer Grundplatte 2 und einer oberen Platte 1 montierten, zwischen Leitplatten 8, 9 eingefügten Gleitsegmente kann durch die Gestaltung einer kegel- oder pyramidenförmigen Fläche hervorgerufen werden. Bei der Bewegung auf der konischen Fläche kann durch die Einstellung der eine Korrektur ermöglichenden Konstruktion und durch einen Austasch der Gleitplatten ein größerer Spärizitätsbereich umfaßt werden. Wie aus der Zeichnung ersichtlich, ist eine Führung 7 an der oberen Platte 1 montiert, in der ein Gleitsegment 4 unter Zwischenschaltung einer oberen Gleitplatte 8 gleitet. Wenn nun die Gleitbahn des Gleitsegments 4, die durch die Führung 7 und die obere Gleitplatte 8 gebildet ist, ausgetauscht wird, kann der Abstand zu der oberen Platte 1 geändert werden. Das gleiche ist bei der unteren Gleitplatte 9 und der Grundplatte 2 vorgesehen.

Bei einer pyramidenförmigen Gleitfläche ist durch die eine Korrektur ermöglichende Konstruktion eine weitgehende Variation der Durchmesser der einsetzbaren Formen (Formsegmente 16 und Formhälften 17) möglich, ohne daß die Abmessungen und das Gewicht der Tragkonstruktion auf unwirtschaftliche Weise zunehmen würden. Gleichzeitig verursachen im Gegensatz zu der konischen Lösung die große Verschiebung des Verschlußringes 3 und der Gleitsegmente 4 keine geometrischen Ungenauigkeiten.

Unter der eine Korrektur ermöglichenden Konstruktion wird ein Ausgleichsring 11 mit den sich darin befindenden Stellelementen, vorteilhafterweise mit Stellschrauben 10 und Befestigungsschrauben 14 sowie mit ausbaubaren Einsatzringen 12 verstanden.

Infolge ihrer Positionierung übertragen die im Ausgleichsring 11 eingebauten Stellschrauben 10 die Schließkraft der Vulkanisiermaschine unmittelbar auf die Segmente, wodurch die Gefahr einer Deformation auf ein Minimum herabgesetzt wird.

Die in dem Formträger eingebauten Gleitsegmente 4 wurden so bemessen, daß die bei der Vulkanisierung auftretende Schließkraft die Gleitflächen in Abhängigkeit deren Grundstoffs belastet, so z. B. werden hier Gleitelemente aus selbstschmierenden Grundstoffen verwendet, bei denen Schmiermittl nicht beansprucht werden. Der Vorteil ohne Schmiermittel auskommen zu können, zeigt sich einerseits in einer vereinfachten Wartung und andererseits wird auf keinen Fall das ausstülpende Schmiermittel in das Rohgummi eingepreßt, wodurch Ausschuß vermieden werden kann. Im geschlossenen Zustand berühren die Gleitsegmente 4 einander nicht. Die eingebauten Formsegmente 16 und die daran anschließenden Formhälften 17 begrenzen den geschlossenen Formhohlraum.

Durch die Modifizierung der entsprechenden strukturellen Elemente des Formträgers kann eine innere Heizung geschaffen werden. Einen Freiheitsgrad des Formträgers erfordert die Zusammenführung des unteren stationären und des oberen sich bewegenden Teils nicht, so daß die Zusammenführung nur bei dem Einbau in die Vulkanisiermaschine eine Rolle spielt.

Die zwei wichtigsten Teile des Formträgers sind der sich bewegende Teil und der stationäre Teil.

Der sich bewegende Teil, der in den Dom der Vulkanisiermaschine eingebaut wird, setzt sich aus den folgenden Komponenten zusammen:

Der obere sich bewegende Teil der Form wird mittels des Auffangrings 5 an den Befestigungsbohrungen des Doms befestigt.

Der Formträger ist über die obere Platte 1 an den Arbeitszylinder angeschlossen. Die sich den Gleitsegmenten 4 anschließenden muldenförmig ausgestalteten Führungen 7 mit einem "T"-Querschnitt sind unter Zwischenschaltung der austauschbaren oberen Gleitplatten 8 an der oberen Platte 1 montiert. Die obere Formhälfte 17 ist mit der oberen Platte 1 verschraubt.

Die innere kegelförmige Fläche des Verschlußringes 3 -vorteilhaft mit einem Halböffnungswinkel von 23° - sperrt die Gleitsegmente 4 ab. Auf der Innenfläche ist die den Auszug des Gleitsegments gewährleistende mit Bronze ausgekleidete Bahn der prismatischen Führungsleiste 6 angeordnet. Die in die Außenfläche des Verschlußringes 3 hineingefräste Bahn erstreckt sich bis zu dem auf der Grundplatte gebauten Zuführer 15.

Das Gleitsegment 4 ist mit der konischen Fläche dem Verschlußring 3 zugewandt und kann mit Hilfe der darauf montierten prismatischen Führungsleiste 6 herausgezogen werden. Um die Reibung herabzusetzen sind vorteilhafterweise die selbstschmierenden Gleitplatten 8, 9 vorgesehen. Die Formsegmenten 16 sind mit Schrauben an den Gleitsegmenten befestigt.

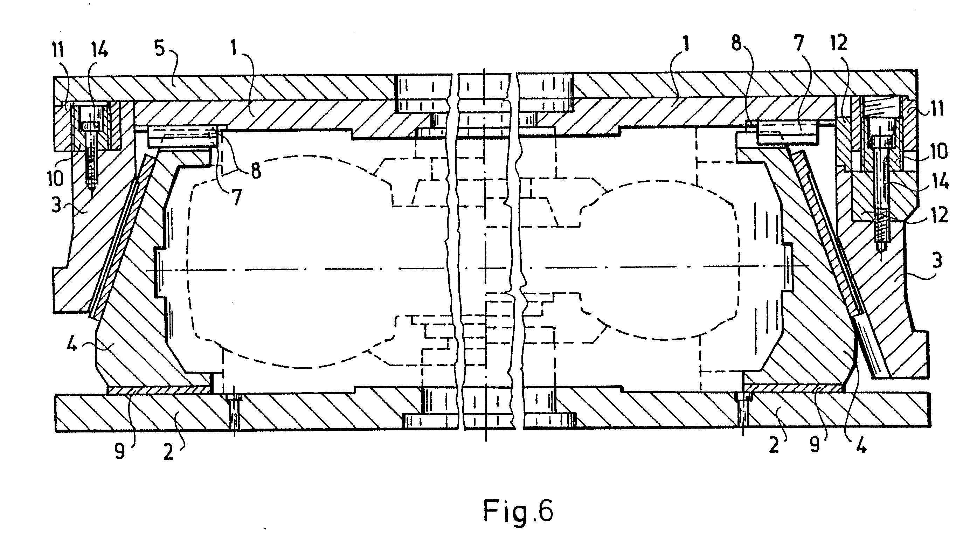

Mit Hilfe der in dem Ausgleichsring 11 eingebauten Stellschraube 10 können die Vorspannungsspalte modifiziert bzw. der einbaubare Durchmesser verringert werden. Durch den Ausbau der Einsatzringe 12 kann wiederum der einbaubare Durchmesser vergrößert werden (Fig. 6).

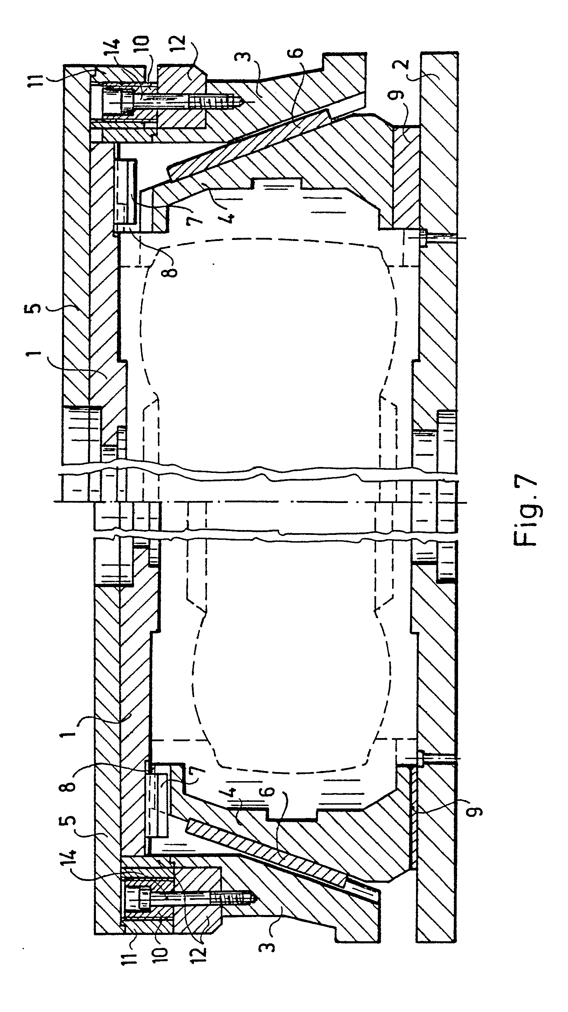

Durch den Austausch der unteren Gleitplatte 9 bzw. der oberen Gleitplatte 8 kann die Sphärizitätsdimension der in den Formträger einbaubaren Formen geändert werden (Fig. 7).

Der Aufbau des auf dem Tisch der Vulkanisiermaschine befestigten Unterteils ist, wie folgt.

Die zentrierende Bohrung der Grundplatte 2 bestimmt die Position der Vulkanisierform in der Vulkanisiermaschine. Der Unterteil wird mit Hilfe der in der Grundplatte 2 vorgesehenen Bohrungen an dem Tisch der Vulkanisiermaschine befestigt, so daß die untere Formhälfte 17 an dem Tisch befestigt ist.

Der Zuführer 15, der an der Grundplatte 2 befestigt ist, bestimmt die Lage des Oberteils und des Unterteils.

Als austauschbare Bestandteile werden in den Formträger für den jeweils herzustellenden Reifen folgende spezifische Formkomponenten eingebaut.
- untere-obere Formhälfte 17,
- Formsegmente 16,
- Form- und Balgringe.

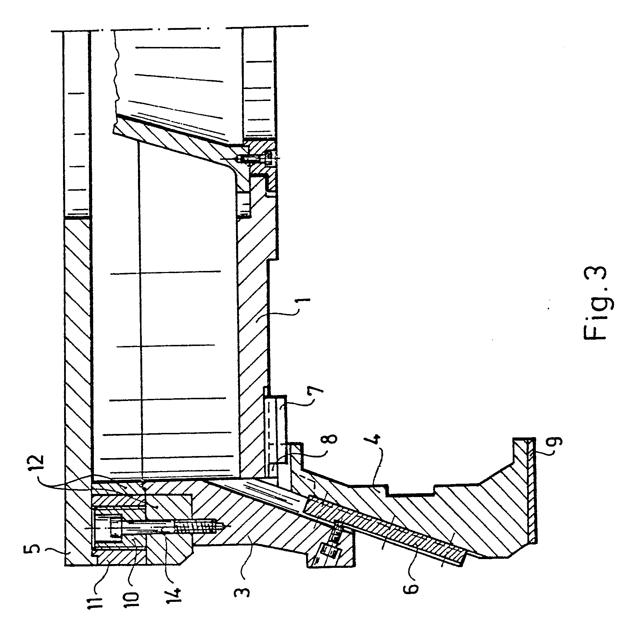

Zuerst wird die Funktion der erfindungsgemäßen Vulkanisierform während des Schließvorgangs beschrieben. In der ersten Phase der Schließbewegung drückt der auf die obere Platte 1 einwirkende Kolbendruck die Gleitsegmente heraus und hält diese in radialer Richtung geöffnet (Fig. 3). Durch diesen geöffneten Zustand kann erreicht werden, daß der eingelegte Rohreifen mit den sich abwärts bewegenden Segmenten (mit den in den Gleitsegmenten 4 eingeschraubten Formsegmenten 16) zusammenstößt. Die Größe der Öffnung des oberen Formteils wird durch die Position der an dem Verschlußring 3 angeordneten Begrenzer 13 bestimmt.

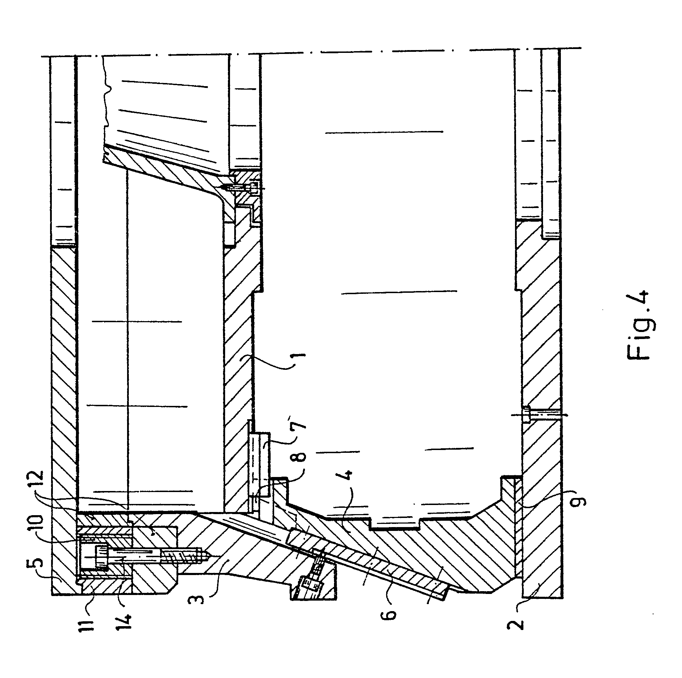

In der zweiten Phase des Schließprozesses erreichen die Gleitsegemente 4 die Grundplatte 2 (Fig. 4), und der sich abwärts bewegende Verschlußring 3 führt dabei den Schließvorgang durch. Die nach unten gerichtete Bewegung des Verschlußringes 3 zwingt die auf der Kegelfläche bzw. auf dem Mantel der Pyramide in Berührung stehenden Gleitsegmente 4 zu einer radialen Verschiebung. In dieser Phase des Schließens wird die Kolbenstange des Arbeitszylinders kontinuierlich zurückgedrückt, während sich die obere Platte 1 der befestigten Platte des Doms nähert. Nach erfolgter Beendigung des Schließprozesses passen sich die eingebauten Formhälften 17 und die auf den Gleitsegmenten 4 aufgeschraubten Formsegmenten 16 einander an, wodurch der in sich geschlossene vulkanisierende Formhohlraum entsteht. Die obere Platte 1 schmiegt sich mit der ausgebauten Formhälfte 17 an die obere Platte des Doms (Fig. 1) an. Durch die Druckwirkung verringern sich die Vorspannungsspalte, bis sie allmählich vollkom

men verschwinden, wodurch die beiden Metallebenen einander berühren.

Die Vulkanisierung selbst findet auf traditionelle Weise statt.

Die geschlossene Form wird mit einer dem Vulkanisierdruck der Vulkanisiermaschine entsprechenden Kraft in einem zusammengepreßten Zustand gehalten. Durch die erhöhte Druckwirkung preßt der Balgsack den Rohreifen in die Musterung ein, wodurch der dem Druck ausgesetzte Reifen die Form des Formhohlraumes annimmt und die Musterung ausgestaltet wird.

In der ersten Phase des Öffnens, wobei die schließende Kraft der Vulkanisiermaschine allmählich aufhört, hält der Arbeitszylinder die obere Platte 1 in ihrer Stellung. Danach zieht der sich hochhebende Verschlußring 3 die mit der oberen Platte herabgepreßten Gleitsegmente 4 mit Hilfe der eingebauten Führungsleiste 6 allmählich nach außen. Das Öffnen in radialer Richtung wird solange fortgesetzt, bis die obere Platte 1 die Begrenzer 13 erreicht (Fig. 4).

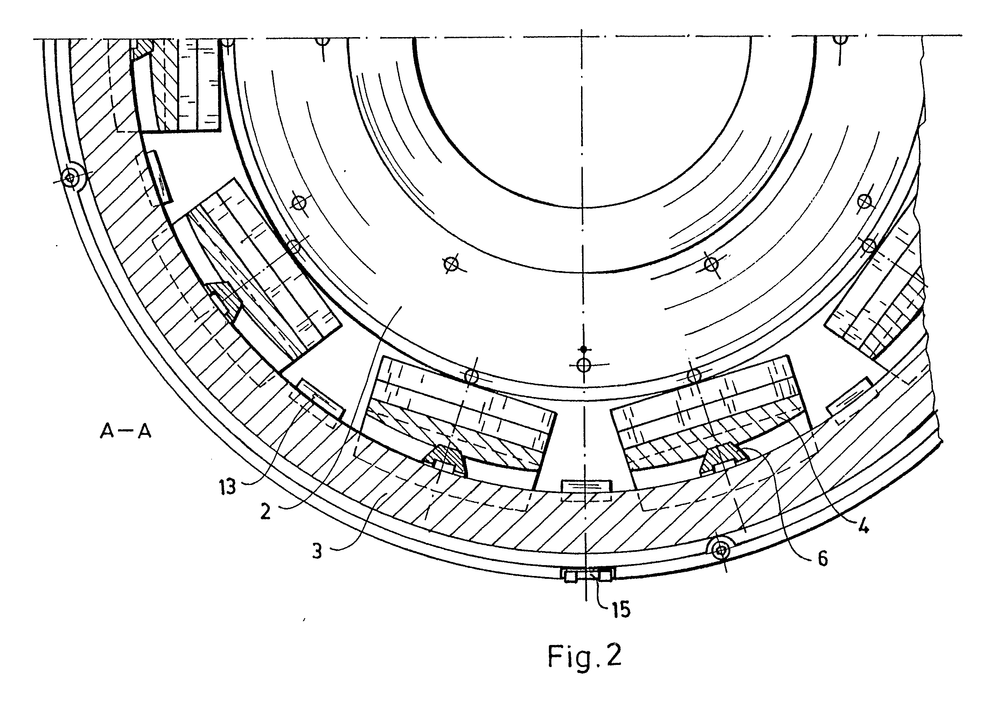

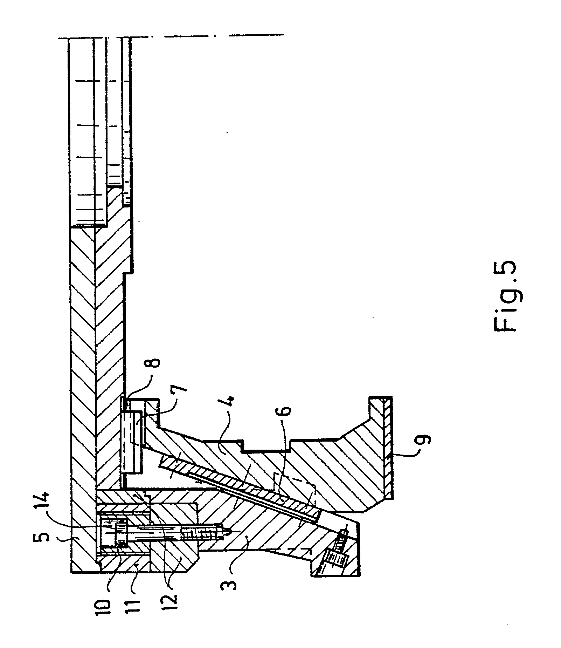

Zuletzt wird der gesamte Oberteil von der Grundplatte 2 hochgehoben (Figur 2), zuerst wird die Brücke der Vulkanisiermaschine vertikal angehoben. Am Ende des Öffnens kippt die Brücke der Maschine mit dem darauf montierten Dom zusammen, damit ein neuer Rohreifen leicht eingesetzt werden kann. Dem Kippen der Brücke vorangehend müssen die geöffneten Gleitsegmente 4 mit Hilfe des Arbeitszylinders und unter Zuhilfenahme der auf der oberen Platte 1 montierten Führung 7 mit einem "T"-Querschnitt und der oberen Gleitplatten 8 zurückgezogen werden (Fig. 5).

## Ansprüche

1. Vulkanisierform für eine Vulkanisiermaschine zur Herstellung von Gummireifen für Kraftfahrzeuge, mit einem vertikal bewegbaren Oberteil, das einen sich an den Dom der Vulkanisiermaschine anschließenden Auffangring (5), eine sich daran angepaßte obere Platte (1), einen Verschlußring (3) sowie den Formhohlraum begrenzende Formsegmente (16) und eine obere Formhälfte aufweist, wobei der ortsfeste Unterteil eine Grundplatte und eine daran befestigte Formhälfte hat, dadurch gekennzeichnet, daß die Formsegmente (16) an, auf der inneren kegel- oder pyramidenförmig ausgestalteten Fläche des Verschlußringes (3) vorgesehenen, in Führungsschienen schräg mitnehmbaren Gleitsegmenten (4) befestigt sind, wobei die Gleitsegmente (4) in horizontal verlaufenden Führungselementen an der oberen Platte geführt sind, und daß auf dem Verschlußring (3) ein die Größe der Vorspannspalte zwischen dem Auffangring (5) und der oberen Platte (1) regulierender Ausgleichsring (11) vorgesehen ist, der eine Stellschraube (10) und eine Befestigungsschraube (14) aufweist.

2. Vulkanisierform nach Anspruch 1, dadurch gekennzeichnet, daß die Stellschraube (10) als Regelelement dient, durch die eine Änderung des Durchmessers innerhalb des Maßbereiches der zu ein und derselben Fahrzeugkategorie gehörenden Reifen ermöglicht ist.

3. Vulkanisierform nach Anspruch 1, dadurch gekennzeichnet, daß austauschbare Gleitplatten (8, 9) als eine Änderung der Sphärizität ermöglichende Elemente vorgesehen sind.

4. Vulkanisierform nach Anspruch 1, dadurch gekennzeichnet, daß ein oder mehrere ausbaubare zum Ändern der Maßbereiche dienende Einsatzringe (12) vorgesehen sind.

5. Vulkanisierform nach Anspruch 3, dadurch gekennzeichnet, daß die Gleitflächen aus einem selbstschmierenden Grundstoff hergestellt sind.

6. Vulkanisierform nach Anspruch 1, dadurch gekennzeichnet, daß die Stellschraube (10) als zur Einstellung der Vorspannspalte dienendes Regelelement vorgesehen ist.

Fig.1

A—A

13
2
3
15
4
6

Fig. 2

EP 0 320 588 A2

Fig.3

EP 0 320 588 A2

Fig.4

Fig.5

EP 0 320 588 A2

Fig.6

EP 0 320 588 A2

Fig. 7

EP 0 320 588 A2